# DEMANDE DE BREVET EUROPEEN

(11) **EP 1 933 250 A1**
(43) Date de publication de la demande: **18.06.2008**
(21) Numéro de dépôt: 06301236.3
(22) Date de dépôt: 12.12.2006
(51) Int. Cl.: G06F 21/00

(54) **Procédé pour exécuter un programme dans un dispositif électronique portable, dispositif et système électroniques correspondants**

(71) Demandeur: GEMPLUS, 13420 Gémenos (FR)
(72) Inventeur: Grezes, Jean-François, 13009, Marseille (FR); Poujol, Stéphane, 13600 La Ciotat (FR)

(57) **Abrégé**

L'invention concerne un système électronique comprenant au moins un terminal (1) et au moins un dispositif (3) électronique portable, le dispositif (3) électronique portable comprenant au moins un fichier (362) de données et étant relié au terminal (1).

Selon l'invention, le terminal (1) comprend des moyens d'écriture d'au moins une première donnée au sein d'un premier fichier (362) de données, le dispositif (3) électronique portable comprend des moyens (34) d'exécution locaux d'au moins un programme correspondant en réponse à la première donnée écrite, et le dispositif (3) électronique portable comprend des moyens d'écriture d'au moins une deuxième donnée au sein d'un deuxième fichier de données, en tant que résultat de l'exécution locale au dispositif électronique portable dudit au moins un programme correspondant.

L'invention concerne également un procédé pour exécuter un programme au sein d'un dispositif (3) électronique portable et un dispositif (3) électronique portable correspondants.

## Description

### Domaine technique de l'invention :

L'invention concerne un procédé pour exécuter un ou des programmes au sein d'un dispositif électronique portable comportant au moins un fichier de données. Le dispositif électronique portable est relié directement ou indirectement à un terminal.

L'invention concerne également un dispositif électronique portable correspondant.

On entend par l'expression « dispositif électronique portable », dans le présent document de brevet, tout dispositif électronique embarqué non autonome en énergie et comprenant au moins une mémoire et un microprocesseur, et destiné à coopérer avec un dispositif hôte pour réaliser une fonction pour le compte du dispositif hôte. Ce type de dispositif électronique portable peut être utilisé notamment pour un stockage de données et une sécurisation de transaction. A titre d'exemple, nous pouvons notamment citer une carte à puce, une clef USB (acronyme utilisé pour « Universal Serial Bus » en langue anglaise), dite USB token (en langue anglaise) pouvant coopérer avec un ordinateur et intégrant au moins une mémoire, une clef sécurisée, dite dongle (en langue anglaise) pouvant coopérer avec un ordinateur et intégrant au moins une mémoire et des moyens permettant d'authentifier un logiciel.

L'invention concerne enfin un système électronique intégrant au moins un terminal et au moins un dispositif électronique portable.

### Etat de la technique :

Il est connu une solution technique dans laquelle un terminal cherche à faire exécuter un programme disponible au sein d'un dispositif électronique portable avec lequel le terminal peut échanger des données.

On connaît, notamment dans le domaine de la téléphonie mobile, une solution impliquant un ordinateur relié à un téléphone portable qui coopère avec une carte SIM (acronyme pour « Subscriber Identity Module » en langue anglaise). L'ordinateur transmet une commande spécifique AT+CSIM (AT étant l'acronyme d' « ATtention ») à destination de la carte SIM au travers du téléphone portable. La commande spécifique utilisée encapsule une commande applicative dédiée à l'application ou au programme à exécuter dans la carte SIM. Une fois la commande applicative spécifique reçue par la carte SIM, celle-ci lance l'exécution du programme souhaité. Ainsi, l'exécution du programme souhaité au sein de la carte SIM génère un résultat transmis, en retour, par la carte SIM, à l'ordinateur.

Cependant, une telle solution basée sur une commande applicative spécifique de la carte SIM présente un inconvénient majeur.

En effet, la commande applicative spécifique n'est pas accessible pour des raisons de sécurité de la carte.

### Exposé de l'invention :

La présente invention a pour objectif de pallier cet inconvénient majeur de l'état de la technique.

Plus précisément, l'un des objectifs de la présente invention est de fournir un procédé et un dispositif électronique portable permettant d'offrir l'accès à une exécution locale d'un programme résidant au sein du dispositif électronique portable à un plus grand nombre de porteurs de tels dispositifs électroniques portables, sans utiliser la commande applicative spécifique AT+CSIM.

En outre, un autre objectif de l'invention est de fournir un système électronique correspondant comportant un terminal relié à un tel dispositif électronique portable.

Ces différents objectifs, ainsi que d'autres qui apparaîtront par la suite, sont atteints à l'aide d'un procédé pour exécuter au moins un programme au sein d'un dispositif électronique portable, le dispositif électronique portable comprenant au moins un fichier de données, le dispositif électronique portable étant relié à un terminal.

Selon l'invention, ledit procédé comprend les étapes suivantes :
- le terminal écrit au moins une première donnée au sein d'un premier fichier de données du dispositif électronique portable,
- en réponse à la première donnée écrite, le dispositif électronique portable exécute au moins un programme correspondant,
- le dispositif électronique portable écrit au moins une deuxième donnée au sein d'un deuxième fichier du dispositif électronique portable, en tant que résultat de l'exécution dudit au moins un programme correspondant..

Le principe général de l'invention repose donc sur l'utilisation d'un ou plusieurs fichiers de données du dispositif électronique portable, en tant qu'intermédiaire(s) entre le terminal et le dispositif électronique portable, pour mémoriser les première et deuxième données écrites intégrant une commande applicative spécifique à un ou plusieurs programmes dont on désire l'exécution, et la réponse correspondante.

L'invention n'impose donc aucune contrainte particulière au niveau matériel du terminal et du dispositif électronique portable. Le terminal mis en jeu doit simplement être capable de pouvoir écrire au sein d'un fichier de données. Le dispositif électronique portable doit être capable de lire le fichier de données mis à jour par la première donnée écrite et écrire la deuxième donnée au sein d'un fichier de données. Le fichier de données modifié par deuxième donnée écrite peut être le même que celui modifié par la première donnée écrite. Entre temps, l'exécution locale du programme requis au travers de la première donnée a pu avoir lieu.

L'invention a donc pour objet une solution technique alternative à la solution technique connue et décrite supra pour exécuter un ou plusieurs programmes dont on désire l'exécution au sein du dispositif électronique portable.

Pour ce faire, seules des commandes d'écriture des première et deuxième données, en tant que requête d'exécution d'un programme souhaité et réponse d'exécution du programme respectivement, sont nécessaires pour implémenter l'invention.

De cette manière, le terminal n'a pas à disposer d'une commande spécifique comme celle nécessitée dans l'état de la technique connu pour accéder au programme à exécuter au sein du dispositif électronique portable. Ainsi, on comprend que l'invention permet un plus large déploiement pour les dispositifs électroniques portables que celui de la solution connue, tel qu'expliqué plus haut, pour accéder à un programme résidant au sein du dispositif électronique portable et bénéficier donc du service correspondant.

Par ailleurs, l'invention propose, non pas l'utilisation d'un canal d'accès direct à un programme du dispositif électronique portable comme dans l'état de la technique explicité plus haut, mais l'utilisation d'un canal d'accès indirect au programme du dispositif électronique portable.

On comprend alors que l'interposition d'une sauvegarde, au sein d'un fichier de données, de la première donnée intégrant une commande applicative spécifique à un programme du dispositif électronique portable dont on désire l'exécution permet, le cas échéant, au dispositif électronique portable, d'exécuter un autre programme en cours utilisant lui un canal d'accès direct. Une telle sauvegarde intercalée propre à l'écriture de la première donnée permet donc de temporiser l'exécution du programme souhaité pour pouvoir éventuellement exécuter un autre programme déjà requis au dispositif électronique portable.

Il en résulte qu'aucune perturbation du contexte présent en cours au sein du dispositif électronique portable ne peut se présenter contrairement au risque présenté avec la solution connue mentionnée plus haut.

Selon un mode de réalisation préférentiel de l'invention, le terminal réalise périodiquement une lecture du deuxième fichier de données jusqu'à ce que le terminal ait lu la deuxième donnée. C'est le terminal qui se charge de venir récupérer la réponse à la requête d'exécution du programme et ce n'est donc pas le dispositif électronique portable qui transmet la réponse, contrairement à ce qui est connu dans l'état de l'art.

Dans un mode de réalisation préférentiel de l'invention, le dispositif électronique portable est contenu au sein d'un dispositif hôte, le dispositif hôte étant relié au terminal, et le terminal transmet une commande d'écriture ou de lecture à destination du dispositif électronique portable par l'intermédiaire du dispositif hôte.

Selon un tel mode de réalisation de l'invention, le terminal et le dispositif hôte échangent des données en mettant en oeuvre un premier protocole de communication, le dispositif hôte et le dispositif électronique portable échangeant des données en mettant en oeuvre un deuxième protocole de communication, le terminal encapsule une commande de lecture ou d'écriture selon le deuxième protocole de communication au sein d'une commande de transfert selon le premier protocole de communication, la commande de transfert indiquant que la commande de lecture ou d'écriture est transmise à destination du dispositif électronique portable, et le dispositif hôte envoie la commande d'écriture ou de lecture au dispositif électronique portable en satisfaisant le premier protocole de communication. Ainsi, le dispositif hôte joue un rôle de relayeur des commandes ou réponses à échanger entre le terminal et le dispositif électronique portable, en utilisant éventuellement deux protocoles de communication distincts.

Avantageusement, le procédé comprend une étape de lecture du premier fichier de données effectuée par le dispositif électronique portable, l'étape de lecture est une étape de reconnaissance de la première donnée au sein du premier fichier de données, la reconnaissance de la première donnée déclenchant l'exécution du programme correspondant.

Selon un mode de réalisation particulier de l'invention, les premier et deuxième fichiers de données constituent un unique fichier de données, les première et deuxième données étant écrites à une seule et même adresse d'enregistrement à l'intérieur dudit fichier de données, lors de chaque lecture, le terminal compare la valeur de la donnée enregistrée à l'adresse d'enregistrement avec la valeur de la première donnée, et, lorsque la valeur de la donnée enregistrée à l'adresse d'enregistrement est différente de la valeur de la première donnée, alors ladite donnée enregistrée correspond à la deuxième donnée.

De façon préférentielle, le premier protocole de communication est conforme à un standard de communication entre un ordinateur portable et un périphérique, et le deuxième protocole de communication est conforme à un standard de communication entre un lecteur de carte à puce ou de carte à mémoire et ladite carte.

Selon un mode de réalisation particulier de l'invention, le premier protocole est choisi parmi les standards suivants : USB, Bluetooth, IEEE802.11, et FireWire, et le deuxième protocole est choisi parmi les standards suivants : ISO7816, USB, MMC, et SD.

Préférentiellement, le dispositif électronique portable est une carte SIM et les premier et deuxième fichiers de données sont des fichiers élémentaires dits EF (acronyme pour « Elementary File » en langue anglaise) selon la norme GSM (acronyme pour « Global System for Mobile Communications » en langue anglaise). A titre d'exemple, il peut s'agir d'un fichier élémentaire de service de message court dit « Short Message Service », de service de message multimédia dit « Multimedia Message Service » ; et/ou d'une liste de contacts téléphoniques dit « Abreviated Dialing Number ». Il est clair, cependant, que l'invention ne s'applique pas uniquement à ce type de fichier de données, et que tout type de fichier de données accessible par le dispositif électronique portable peut être utilisé, tel un fichier de données dit propriétaire, propre.

L'invention concerne également un système électronique comprenant au moins un terminal et au moins un dispositif électronique portable, le dispositif électronique portable comprenant au moins un fichier de données et étant relié au terminal.

Selon l'invention, le terminal comprend des moyens d'écriture d'au moins une première donnée au sein d'un premier fichier de données, le dispositif électronique portable comprend des moyens d'exécution locaux d'au moins un programme correspondant en réponse à la première donnée écrite, et le dispositif électronique portable comprend des moyens d'écriture d'au moins une deuxième donnée au sein d'un deuxième fichier, en tant que résultat de l'exécution locale au dispositif électronique portable dudit au moins un programme correspondant.

L'invention concerne en outre un dispositif électronique portable, le dispositif électronique portable comprenant au moins un fichier de données.

D'après l'invention, le dispositif électronique portable comprend :
- des moyens d'écriture d'au moins une première donnée au sein d'un premier fichier de données, suite à une commande spécifique provenant de l'extérieur du dispositif électronique portable,
- des moyens d'exécution locale d'au moins un programme associé à la première donnée écrite en réponse à l'écriture de la première donnée, et
- des moyens d'écriture d'au moins une deuxième donnée au sein d'un deuxième fichier de données, en tant que résultat de l'exécution locale dudit programme.

Ainsi, l'invention propose donc une solution technique simple et optimisant les coûts de fabrication et d'exploitation du dispositif électronique portable correspondant.

Selon un mode de réalisation particulier de l'invention, le dispositif électronique portable est une carte SIM telle que définie dans la norme GSM.

Avantageusement, les premier et deuxième fichiers constituent un unique fichier élémentaire dit EF selon la norme GSM.

Préférentiellement, les première et deuxième données sont écrites à une même adresse d'enregistrement à l'intérieur du fichier élémentaire EF.

Enfin, l'invention est relative à un système.

Selon l'invention, le système comprend :
- un terminal apte à communiquer avec au moins un périphérique selon un premier protocole de communication,
- un dispositif hôte relié au terminal et communicant avec le terminal selon le premier protocole de communication, et
- un dispositif électronique portable placé au sein du dispositif hôte, le dispositif électronique portable et le dispositif hôte communiquant selon un deuxième protocole de communication, et correspondant au dispositif électronique portable tel que précédemment décrit.

D'une manière avantageuse, le dispositif hôte est un téléphone portable.

### Description des figures des dessins :

D'autres caractéristiques et avantages de l'invention apparaîtront à la lecture de la description d'un unique mode de réalisation préférentiel de l'invention, donné à titre de simple exemple indicatif non limitatif et des dessins annexés, dans lesquels :
- la figure 1 présente un schéma synoptique simplifié d'un mode de réalisation particulier d'un système électronique selon l'invention ;
- la figure 2 illustre un schéma simplifié d'un dispositif hôte compris au sein du système électronique de la figure 1 ;
- la figure 3 présente un schéma simplifié d'un mode de réalisation particulier d'un dispositif électronique portable coopérant avec le dispositif hôte de la figure 2 ; et
- la figure 4 illustre un organigramme simplifié d'un mode de réalisation préférentiel du procédé selon l'invention mis en oeuvre au sein du système électronique de la figure 1.

### Description d'un mode de réalisation particulier de l'invention :

Le principe général de l'invention repose donc sur une utilisation d'un ou plusieurs fichiers de données du dispositif électronique portable au(x)quel(s) le terminal et le dispositif électronique portable accèdent en écriture, pour faire exécuter un ou des programmes au sein du dispositif électronique portable, et tenir à disposition au terminal une réponse correspondante après une telle exécution.

Ainsi, c'est au sein d'un fichier de données du dispositif électronique portable adressé qu'à un instant donné se trouve une requête d'exécution locale du ou des programmes désirés. De même, c'est au sein de fichiers de données éventuellement distincts, qu'à un instant ultérieur donné, se trouvent une requête d'exécution locale du ou des programmes désirés et la réponse correspondante.

De cette manière, le terminal accède indirectement à l'exécution du ou des programmes désirés au sein du dispositif électronique portable, , contrairement à la solution décrite plus haut, c'est-à-dire sans envoyer directement au dispositif électronique portable une commande applicative spécifique d'exécution au sein du dispositif électronique portable.

Dans la suite de la présente description, on considère le cas d'un système électronique comprenant un terminal, un dispositif hôte et un dispositif électronique portable.

Il est clair, cependant, que l'invention s'applique à d'autres systèmes électroniques. L'homme du métier pourra aisément passer du système électronique illustré à un autre système électronique, tout en restant dans le cadre de la présente invention. Il peut s'agir d'un système électronique intégrant seulement deux dispositifs électroniques tels, par exemple, un agenda électronique personnel ou PDA (acronyme pour « Personal Digital Assistant » en langue anglaise), en tant que terminal, et une carte SIM telle que définie selon la norme GSM, en tant que dispositif électronique portable. Dans un tel système, l'agenda électronique personnel échange avec la carte SIM des données écrites dans un fichier de données mémorisé au sein de la carte SIM, afin de faire exécuter un programme à la carte SIM. Les données sont relatives, d'une part, à une requête d'exécution d'un programme au sein de la carte SIM, et d'autre part, la réponse associée à un résultat d'exécution ou un compte-rendu d'exécution du programme exécuté par la carte SIM.

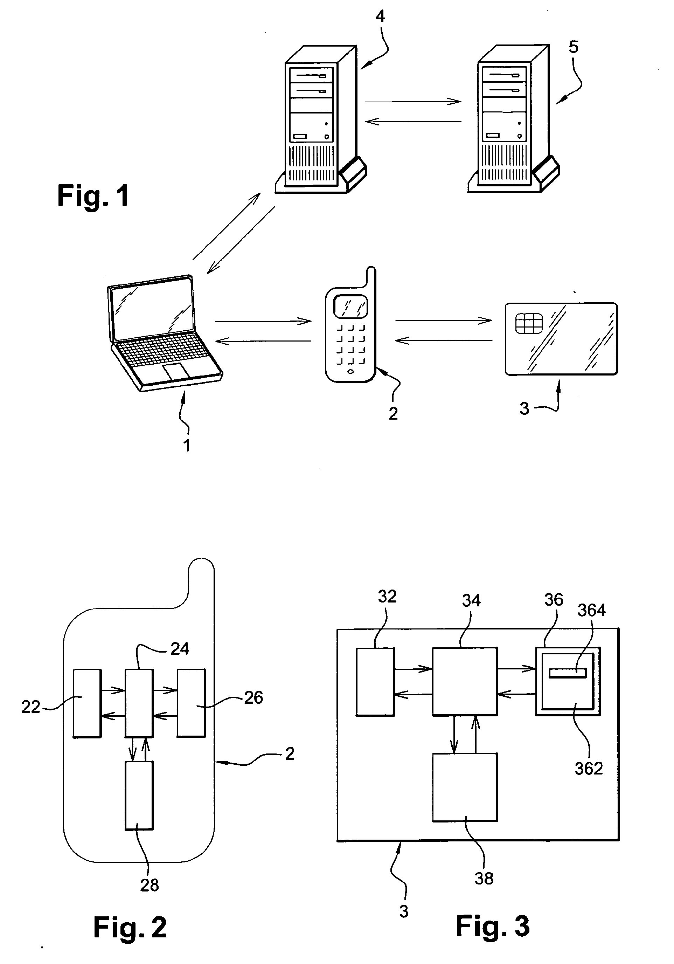

Comme présenté à titre d'exemple en relation avec la figure 1, le système électronique comporte un ordinateur 1 personnel, en tant que terminal, relié, au travers d'un téléphone 2 portable, en tant que dispositif hôte, à une carte 3 SIM telle que définie selon la norme GSM, en tant que dispositif électronique portable.

L'ordinateur 1 personnel est relié au téléphone 2 portable par exemple au travers d'une liaison série, typiquement à l'aide d'un câble de type USB.

Bien entendu, tout autre type de lien entre l'ordinateur 1 personnel et le téléphone 2 portable peut s'envisager sans sortir pour autant du cadre de l'invention. Il peut s'agir d'une liaison radiofréquence encore désignée pas sans contact respectant un protocole de communication standard de type Bluetooth, IEEE 802.11 (acronyme pour « Institute of Electrical and Electronics Engineers » en langue anglaise) ou Firewire. Le protocole de communication entre l'ordinateur 1 personnel et le téléphone 2 portable peut également être conforme à un standard de communication entre un ordinateur 1 personnel et un périphérique, tel un lecteur de carte à puce, c'est-à-dire d'une carte munie de moyens de contrôle, ou un lecteur de carte à mémoire, c'est-à-dire d'une carte dotée d'au moins une mémoire de stockage de données sans moyens de contrôle. Un microprocesseur constitue les moyens de contrôle d'une carte à puce.

Un pilote (ou « driver » en langue anglaise) USB correspondant installé sur l'ordinateur 1 personnel permet d'émuler la présence d'un port série sur l'ordinateur 1 personnel. En outre, le pilote USB permet à une application ou programme exécuté au sein de l'ordinateur 1 personnel de communiquer avec une interface modem du téléphone 2 portable.

Le programme exécuté par l'ordinateur 1 personnel permet, entre autres, de communiquer avec un autre programme embarqué (encore appelé « applet » en langue anglaise) au sein de la carte 3 SIM et à exécuter par la carte 3 SIM.

Lorsque le programme de l'ordinateur 1 personnel désire communiquer avec l'autre programme de la carte 3 SIM, le programme de l'ordinateur 1 personnel ouvre une connexion sur le port série virtuel émulé par le pilote USB.

La carte 3 SIM de la figure 1 est insérée classiquement sous une batterie (non représentée) du téléphone 2 portable qui la reçoit. La batterie est utilisée pour alimenter en énergie, d'une part le téléphone 2 portable, et d'autre part, la carte 3 SIM.

Le téléphone 2 portable et la carte 3 SIM échangent des données propres à l'exécution par exemple d'un programme d'authentification, selon un protocole standard de communication, tel qu'une norme relative à une technologie à contact tel l'ISO 7816 (acronyme pour « International Standards Organization » en langue anglaise). Il peut s'agir pour le protocole de communication entre le téléphone 2 portable et la carte 3 SIM d'une autre norme telle que l'USB, MMC (acronyme pour « Multimedia Card » en langue anglaise) et SD (acronyme pour « Secure Digital Card » en langue anglaise).

Selon une variante de réalisation, le protocole de communication est conforme à un standard de communication selon une technologie sans contact entre un lecteur de carte à puce et une carte à puce, ou un lecteur de carte à mémoire et une carte à mémoire.

L'ordinateur 1 personnel est, en outre, relié, via un réseau du type Internet, à un serveur 4 administré par un opérateur de téléphonie mobile. Le serveur 4 est lui-même relié à un serveur 5 dédié à l'authentification de porteurs de cartes SIM.

Lorsqu'un porteur de la carte 3 SIM désire accéder à certaines données, par exemple une ou des photos accessibles via le serveur de l'opérateur de téléphonie, l'ordinateur 1 personnel affiche, sur son écran, la page web d'interface de l'opérateur de téléphonie.

Pour accéder à de telles données, le porteur de la carte 3 SIM peut, par exemple, sélectionner, au moyen d'une souris (non représentée) reliée à l'ordinateur 1 personnel, un bouton dédié à un service de téléphonie apparaissant à l'écran et nécessitant une authentification de la carte 3 SIM.

Le serveur 4 de l'opérateur de téléphonie requiert que le porteur de la carte 3 SIM s'authentifie. Pour s'authentifier, un programme d'authentification, par exemple, le programme, connu en soi, d'authentification de la carte SIM, appelé OTP (acronyme pour « One Time Password » en langue anglaise) est à mettre en oeuvre.

L'ordinateur 1 personnel transmet, via le téléphone 2 portable, à destination de la carte 3 SIM, une commande spécifique d'écriture de données relatives à la requête d'exécution du programme OTP d'authentification au sein d'un fichier de données dit EF SMS de la carte 3 SIM.

Selon une variante de réalisation, il s'agit d'un fichier de données dit EF MMS (acronyme pour « Multimedia Message Service » en langue anglaise) de la carte 3 SIM.

D'après une autre variante de réalisation, il s'agit d'un fichier de données dit EF ADN (acronyme pour « Abbreviated Dialing Number » en langue anglaise) de la carte 3 SIM.

L'homme du métier peut prévoir encore un autre type de fichier de données sans pour autant sortir du cadre de la présente invention. Il peut s'agir d'un fichier propriétaire particulier propre au fournisseur de la carte 3 SIM.

Cependant, le fichier de données de la carte 3 SIM devant être mis à jour par l'écriture des données relatives à la requête d'exécution du programme OTP d'authentification est accessible au moins en lecture par la carte 3 SIM et éventuellement son porteur. De même, le fichier de données de la carte 3 SIM devant être mis à jour par l'écriture des données relatives au résultat d'exécution du programme OTP d'authentification par la carte 3 SIM est accessible au moins en lecture par l'ordinateur 1 personnel et éventuellement le porteur de la carte 3 SIM.

L'ordinateur 1 personnel échange des données avec le téléphone 2 portable en satisfaisant le protocole de communication standard USB.

L'ordinateur 1 personnel encapsule, au sein de données satisfaisant le protocole de communication standard USB, la commande spécifique d'écriture des données relatives à la requête d'exécution du programme OTP d'authentification au sein d'une commande de transfert. La commande de transfert indique au téléphone 2 portable que la commande spécifique d'écriture des données relatives à la requête d'exécution du programme OTP d'authentification est destinée à la carte 3 SIM.

La commande spécifique d'écriture des données relatives à la requête d'exécution du programme OTP d'authentification satisfait un protocole de communication utilisé entre le téléphone 2 portable et la carte 3 SIM, à savoir pour le présent exemple, la norme ISO 7816.

La commande spécifique d'écriture des données relatives à la requête d'exécution du programme OTP d'authentification sera décrite infra dans de plus amples détails.

La carte 3 SIM reçoit, par l'intermédiaire du téléphone 2 portable, la commande spécifique d'écriture des données relatives à la requête d'exécution du programme OTP d'authentification au sein du fichier de données EF SMS de la carte 3 SIM.

C'est la carte 3 SIM qui est chargée de mémoriser les données relatives à la requête d'exécution du programme OTP d'authentification au sein du fichier EF SMS.

La carte 3 SIM écrit les données relatives à la requête d'exécution du programme OTP d'authentification au sein du fichier de données EF SMS, suite à la commande correspondante provenant de l'ordinateur 1 personnel.

Après la modification du fichier EF SMS, la carte 3 SIM lit le fichier de données EF SMS.

Pour lire le fichier de données EF SMS concerné par l'écriture données relatives à la requête d'exécution du programme OTP d'authentification, un programme de la carte 3 SIM détecte une mise à jour de ce fichier EF SMS qui déclenche sa lecture.

Puis, la carte 3 SIM identifie la présence et la nature des données relatives à la requête d'exécution du programme OTP d'authentification d'une manière décrite plus en détail plus loin.

Dans une variante de réalisation, un ou des paramètres propres au programme à exécuter peuvent également être inclus dans les données écrites propres à la requête d'exécution. De tels paramètres sont par exemple utilisés par le programme à exécuter par la carte 3 SIM ou informés la carte 3 SIM. La ou les données d'information indiquent, par exemple, à la carte 3 SIM, la date pour laquelle un résultat correspondant à la requête d'exécution est attendu en réponse.

La carte 3 SIM est chargée, d'une part, d'exécuter la requête d'exécution du programme OTP d'authentification, et d'autre part, d'écrire, au sein du fichier de données EF SMS, le résultat de l'exécution du programme OTP d'authentification.

Le programme OTP d'authentification est donc exécuté au sein de la carte 3 SIM.

Le serveur 5 d'authentification distant et la carte 3 SIM génèrent, chacun de son côté, à chaque nouvelle session, un nouveau mot de passe associé à un identifiant (encore dit login) attribué à la carte 3 SIM.

Le nouveau mot de passe déterminé est dépendant de la valeur courante d'un compteur de synchronisation. Cette valeur est incrémentée, d'une part au sein du serveur 5 d'authentification, et d'autre au sein de la carte 3 SIM, à chaque nouvelle session.

Lorsque le nouveau mot de passe a été généré par la carte 3 SIM, alors la carte 3 SIM écrit les données relatives au nouveau mot de passe généré et à l'identifiant, en tant que résultat de l'exécution du programme OTP d'authentification, au sein du fichier EF SMS.

Il est à noter que la carte 3 SIM, après avoir généré le nouveau mot de passe associé à l'identifiant pour s'authentifier, ne transmet pas, de sa propre initiative, un tel résultat d'exécution du programme OTP d'authentification à destination de l'ordinateur 1 personnel.

L'ordinateur 1 personnel doit maintenant récupérer les données relatives au nouveau mot de passe et à l'identifiant, afin de pouvoir les soumettre, au travers du serveur 4 de l'opérateur de téléphonie, au serveur 5 d'authentification pour validation de l'authentification.

Pour récupérer les données relatives au résultat d'exécution, l'ordinateur 1 personnel comprend un programme permettant de transmettre régulièrement une commande spécifique de lecture du fichier de données EF SMS modifié par l'écriture du résultat d'exécution correspondant.

La transmission de la commande spécifique de lecture du fichier de données affecté par l'écriture du résultat d'exécution du programme OTP d'authentification à destination de la carte 3 SIM via le téléphone 2 portable est périodique selon une période prédéfinie. La période prédéfinie est, par exemple, environ de une à trois secondes à compter du moment de la transmission de la commande soit d'écriture de la requête d'exécution du programme OTP d'authentification soit de lecture précédente du résultat d'exécution.

Lorsque le résultat d'exécution du programme OTP d'authentification écrit au sein du fichier EF SMS a été lu et identifié et, une réponse à la dernière commande de lecture en date est transmise depuis la carte 3 SIM via le téléphone 2 portable à destination de l'ordinateur 1 personnel. La réponse comporte, dans l'exemple présenté, le résultat d'exécution du programme OTP d'authentification écrit, à savoir le nouveau mot de passe et l'identifiant correspondant.

Bien entendu, pour un programme dont l'exécution a été requise, le résultat d'exécution peut consister en un simple compte-rendu (ou « status » en langue anglaise) du fait que l'exécution du programme localement à la carte 3 SIM a effectivement eu lieu.

L'ordinateur 1 personnel, après la transmission d'une ou plusieurs commandes de lecture du résultat correspondant, lit, en retour, la réponse relative au résultat écrit par la carte 3 SIM au sein du fichier EF SMS de la carte 3 SIM.

Pour lire le résultat correspondant, l'ordinateur 1 personnel encapsule, au sein de données satisfaisant le protocole de communication standard USB, la commande spécifique de lecture des données relatives au résultat d'exécution du programme OTP d'authentification au sein d'une commande de transfert. La commande de transfert indique au téléphone 2 portable que la commande spécifique de lecture des données relatives au résultat d'exécution du programme OTP d'authentification est destinée à la carte 3 SIM.

La valeur du mot de passe déterminée par la carte 3 SIM associée à l'identifiant de la carte 3 SIM sont fournies, en tant que résultat de l'exécution du programme OTP d'authentification, par la réponse de la carte 3 SIM à la dernière commande de lecture transmise par l'ordinateur 1 personnel.

L'ordinateur 1 personnel transmet cette réponse, via le serveur 4 de l'opérateur de téléphonie, à destination du serveur 5 d'authentification.

Le serveur 5 d'authentification peut prendre en compte le résultat de l'exécution du programme OTP d'authentification au sein de la carte 3 SIM.

Le serveur 5 d'authentification effectue, de son côté, l'exécution du programme OTP d'authentification en incrémentant au préalable d'une unité la valeur courante du compteur de synchronisation mémorisant le nombre d'authentifications, ou de sessions, déjà requis.

De cette manière, le serveur 5 d'authentification génère, en tenant compte de la valeur du compteur de synchronisation, un résultat de référence à obtenir. Le résultat de référence sert de base à une comparaison à effectuer avec le résultat fourni à l'origine par la carte 3 SIM dans sa réponse.

Lorsque le résultat de référence généré par le serveur 5 d'authentification pour l'identifiant en question concorde avec le résultat fourni par la carte 3 SIM, alors le serveur 5 d'authentification notifie le serveur 4 de l'opérateur de téléphonie de la validité de l'authentification de la carte 3 SIM.

Dans l'hypothèse de l'obtention de la validité notifiée par le serveur 5 d'authentification au serveur 4 de l'opérateur de téléphonie, les échanges de données entre le serveur 4 de l'opérateur de téléphonie et l'ordinateur 1 personnel peuvent se poursuivre. Le serveur 4 de l'opérateur de téléphonie autorise alors d'autre(s) échange(s) de données impliquant la carte 3 SIM.

On présente maintenant, en relation avec la figure 2, un mode de réalisation particulier du téléphone 2 portable, en tant que dispositif hôte, inclus au sein du système électronique explicité ci-dessus.

Le téléphone 2 portable est utilisé comme un modem intercalé entre l'ordinateur 1 personnel et la carte 3 SIM pour communiquer les données à échanger.

En utilisant le modem du téléphone, le programme mis en oeuvre sur l'ordinateur 1 personnel utilise, en tant que commande d'écriture au sein du fichier EF SMS de la carte 3 SIM, la commande AT+CMGW connue en soi, et, en tant que commande de lecture au sein du fichier EF SMS de la carte 3 SIM, la commande AT+CMGR connue en soi.

Dans le cadre de l'invention, tout ordinateur capable de communiquer avec un modem peut être utilisé au sein du système électronique.

Le téléphone 2 portable comprend une interface 22 avec l'ordinateur 1 personnel reliés à des moyens 24 d'analyse des données et de contrôle, eux-mêmes reliés à une interface 26 avec la carte 3 SIM.

Les moyens 24 d'analyse des données et de contrôle sont constitués par un microprocesseur 24.

Le téléphone 2 portable est configuré de sorte que l'ordinateur 1 personnel accède à l'interface 22 du téléphone 2 portable. Le téléphone 2 portable échange, au travers de l'interface 22 avec l'ordinateur 1 personnel, notamment les données relatives à la requête d'exécution du programme OTP d'authentification et celles relatives au résultat de son exécution, selon le protocole de communication USB choisi.

Le microprocesseur 24 analyse les données reçues soit de l'ordinateur 1 personnel via l'interface 22 avec l'ordinateur personnel soit de la carte 3 SIM via l'interface 26 avec la carte SIM.

Lorsque des données proviennent de l'ordinateur 1 personnel, l'interface 22 avec l'ordinateur personnel les reçoit et les transmet au microprocesseur 24.

Le microprocesseur 24 détecte une commande spécifique d'écriture des données relatives à la requête d'exécution du programme OTP d'authentification ou une commande spécifique de lecture des données relatives au résultat d'exécution du programme OTP d'authentification adressée à la carte 3 SIM. Le microprocesseur 24 extrait alors la commande spécifique d'écriture des données relatives à la requête d'exécution du programme OTP d'authentification ou la commande spécifique de lecture des données relatives au résultat d'exécution du programme OTP d'authentification de la commande de transfert correspondante issue de l'ordinateur 1 personnel. Puis, Le microprocesseur 24 transmet la commande spécifique d'écriture des données relatives à la requête d'exécution du programme OTP d'authentification ou la commande spécifique de lecture des données relatives au résultat d'exécution du programme OTP d'authentification à l'interface 26 avec la carte SIM.

L'interface 26 avec la carte SIM envoie à la carte 3 SIM la commande spécifique d'écriture des données relatives à la requête d'exécution du programme OTP d'authentification ou la commande spécifique de lecture des données relatives au résultat d'exécution du programme OTP d'authentification selon le protocole de communication standard ISO 7816.

Lorsque des données proviennent de la carte 3 SIM, l'interface 26 avec la carte SIM les reçoit et les transmet au microprocesseur 24.

Ce microprocesseur 24 identifie soit les données relatives à une réponse à la commande spécifique d'écriture des données relatives à la requête d'exécution du programme OTP d'authentification soit celles relatives à une réponse à la commande spécifique de lecture des données relatives au résultat d'exécution du programme OTP d'authentification.

Puis, le microprocesseur 24 encapsule de telles données au sein d'une commande de transfert correspondante.

Ensuite, le microprocesseur 24 transmet la commande de transfert encapsulant les données relatives à une réponse à la commande spécifique d'écriture des données relatives à la requête d'exécution du programme OTP d'authentification ou celles relatives à une réponse à la commande spécifique de lecture des données relatives au résultat d'exécution du programme OTP d'authentification au sein d'une commande de transfert correspondante à l'interface 22 avec l'ordinateur personnel.

L'interface 22 avec l'ordinateur personnel envoie, à l'ordinateur 1 personnel, selon le protocole de communication standard USB, les données propres à la commande de transfert encapsulant les données relatives à une réponse à la commande spécifique d'écriture des données relatives à la requête d'exécution du programme OTP d'authentification ou celles relatives à une réponse à la commande spécifique de lecture des données relatives au résultat d'exécution du programme OTP d'authentification.

En outre, le téléphone 2 portable intègre des moyens 28 de mémorisation, par exemple une mémoire de type RAM (acronyme pour « Random Access Memory » en langue anglaise) reliés au microprocesseur 24. Les moyens 28 de mémorisation enregistrent, entre autres, le contenu du fichier EF SMS pour le mettre à disposition de l'ordinateur 1 personnel, évitant ainsi un accès coûteux en temps depuis l'ordinateur 1 personnel via le téléphone 2 portable à la carte 3 SIM.

Il est à noter que toute transmission du téléphone 2 portable vers la carte 3 SIM s'effectue à l'initiative du téléphone 2 portable. Ainsi, le téléphone 2 portable gère le ou les moments où il transmet sans remettre en cause sa propre communication notamment avec un réseau de téléphonie mobile connecté. C'est notamment le cas pour la transmission de la commande spécifique d'écriture des données relatives à la requête d'exécution du programme OTP d'authentification, de la commande spécifique de lecture des données relatives au résultat d'exécution du programme OTP d'authentification, des données relatives à une réponse à la commande spécifique d'écriture des données relatives à la requête d'exécution du programme OTP d'authentification et de celles relatives à une réponse à la commande spécifique de lecture des données relatives au résultat d'exécution du programme OTP d'authentification. De cette manière, le contexte à un instant donné du téléphone 2 portable en communication avec le réseau de téléphonie mobile n'est pas perturbé par le traitement d'une requête d'exécution du programme OTP d'authentification.

Les différents moyens compris au sein du téléphone 2 portable peuvent être intégrés au sein d'un seul ou de plusieurs composants électroniques dédiés à une ou plusieurs des fonctions concernées décrites ci-dessus.

On décrit, à présent, en relation avec la figure 3, un mode de réalisation particulier de la carte 3 SIM selon l'invention.

La carte 3 SIM est insérée au sein du téléphone 2 portable effectuant la fonction de modem.

Ainsi, une entité logicielle externe peut communiquer avec la carte 3 SIM. L'entité logicielle peut par exemple être un programme chargé dans le téléphone 2 portable et s'exécutant localement sur le téléphone 2 portable. L'entité logicielle est, dans le mode de réalisation particulier présenté, un programme chargé sur l'ordinateur 1 personnel et s'exécute localement sur l'ordinateur 1 personnel.

Il convient de noter qu'un seul programme externe s'exécutant sur une entité externe à la carte 3 SIM peut communiquer avec plusieurs programmes internes à la carte 3 SIM s'exécutant localement dans la carte 3 SIM en échangeant des données au travers du fichier de données EF SMS.

En outre, un programme interne à la carte 3 SIM peut communiquer avec plusieurs programmes externes à la carte 3 SIM également en échangeant des données au travers du fichier de données EF SMS.

La carte 3 SIM inclut une interface 32 avec le téléphone 2 portable reliée à un microprocesseur 34, en tant que moyens d'analyse et de contrôle des communications de la carte SIM.

Le microprocesseur 34 est lui-même relié, d'une part, à une première mémoire 36 par exemple de type EEPROM (acronyme pour « Electronically Erasable Programmable Read-Only Memory » en langue anglaise) stockant le fichier de données EF SMS, et, d'autre part, à une deuxième mémoire 38 par exemple de type ROM (acronyme de « Read Only Memory » en langue anglaise) stockant en particulier le système d'exploitation et le programme OTP d'authentification.

Le microprocesseur 34 détecte une commande spécifique d'écriture des données relatives à la requête d'exécution du programme OTP d'authentification au sein du fichier 362 de données EF SMS de la carte 3 SIM. Le microprocesseur 34 exécute la commande spécifique d'écriture en s'adressant à la première mémoire 36 sauvegardant le fichier 362 de données EF SMS.

Le fichier 362 de données EF SMS est alors modifié par écriture des données relatives à la requête d'exécution du programme OTP d'authentification au niveau d'une adresse 364 d'enregistrement disponible pour une telle écriture.

Une fois les données écrites, la carte 3 SIM informe automatiquement un programme, en lui fournissant des données d'information relatives à un évènement de mise à jour du fichier depuis l'extérieur, que le fichier 362 de données EF SMS, sous surveillance lors de son installation, a été mis à jour. Le programme d'information est par exemple une application « javacard » sur la carte 3 SIM. Ce programme d'information peut, à partir de ce moment, lire les données écrites relatives à la requête d'exécution du programme OTP d'authentification, suite à l'exécution de la commande d'écriture, au sein du fichier 362 EF SMS transmises par une entité logicielle externe.

Ce programme d'information peut ensuite répondre aux données de la requête d'exécution du programme OTP d'authentification au travers du fichier 362 de données EF SMS.

Plus exactement, le programme d'information écrit, à l'adresse 364 d'enregistrement du fichier EF SMS, les données relatives au résultat d'exécution du programme OTP d'authentification.

Ainsi, le programme d'information écrase les données relatives à la requête d'exécution du programme OTP d'authentification écrites à la même adresse 364 d'enregistrement concernée du fichier 362 EF SMS.

On comprend aisément que, pour une session donnée, une communication depuis l'extérieur à la carte 3 SIM vers la carte 3 SIM et une communication depuis la carte 3 SIM vers l'extérieur à la carte 3 SIM peuvent avoir lieu quasi simultanément du fait de l'utilisation d'une adresse 364 d'enregistrement du fichier EF SMS pour chaque communication.

Selon une variante de réalisation (non représentée), l'adresse d'enregistrement du fichier EF SMS prévue pour l'enregistrement de données entrantes, c'est-à-dire provenant de l'extérieur de la carte 3 SIM et destinées à la carte 3 SIM, est distincte de l'adresse d'enregistrement du fichier EF SMS prévue pour l'enregistrement de données sortantes, c'est-à-dire destinées à l'extérieur de la carte 3 SIM.

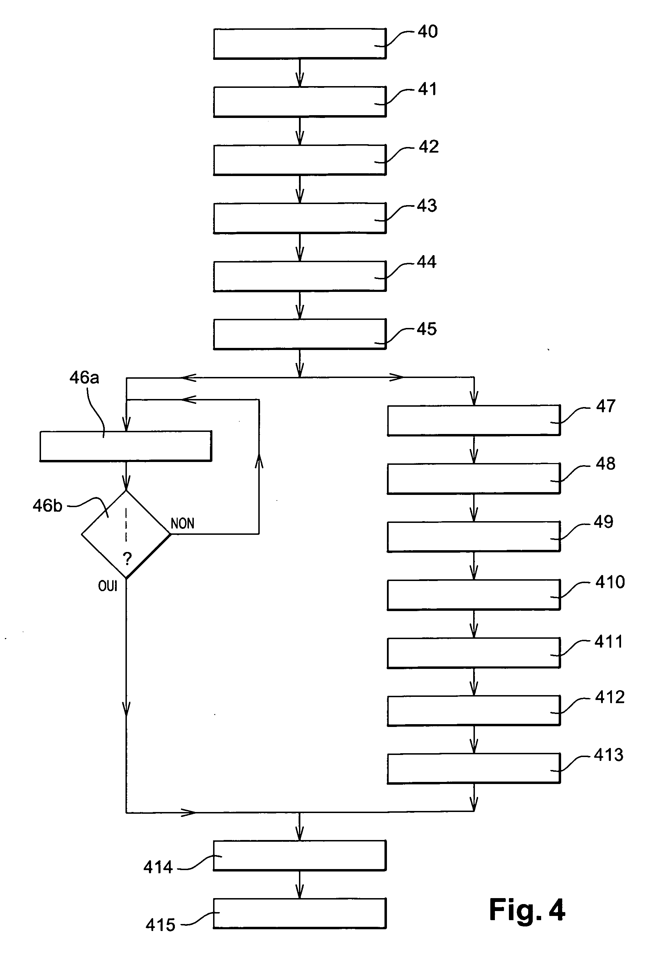

Comme illustré en relation avec la figure 4, un mode particulier de réalisation du procédé selon l'invention pour exécuter le programme OTP d'authentification au sein de la carte 3 SIM va maintenant être explicité.

Tout d'abord, lors d'une première étape 40, le programme externe installé au sein de l'ordinateur 1 personnel ouvre une connexion sur le port série virtuel émulé par le pilote USB.

Lors d'une étape 41 suivante, l'ordinateur 1 personnel transmet, à destination de la carte 3 SIM, sur le port série ouvert, une commande spécifique d'indication AT+CPMS= "SM", "SM " du fichier EF SMS à considérer. La commande d'indication informe le téléphone 2 portable de la sélection du fichier EF SMS, pour les échanges de données dédiées au fichier EF SMS entre l'ordinateur 1 personnel et la carte 3 SIM. Ainsi, toute écriture ou lecture ultérieure de données relatives à l'exécution locale à la carte 3 SIM du programme OTP d'authentification devront s'effectuer au travers du fichier de données EF SMS indiqué, pour la requête d'exécution et la réponse correspondantes.

Puis, l'ordinateur 1 personnel génère 42 une requête d'exécution du programme OTP d'authentification au sein de la carte 3 SIM selon un format de données prédéterminé. Le format de données prédéterminé est connu également de la carte 3 SIM, soit en étant au préalable mémorisé au sein d'une mémoire de la carte 3 SIM, soit en transmettant au préalable une commande spécifique d'indication du format de données à utiliser pour requérir l'exécution du programme OTP d'authentification.

Le format de données pour la requête d'exécution est, selon un exemple, la séquence de données de 11 octets en hexadécimale suivante : « CAFE41074D050474657374 ». Une telle séquence de données comporte un format selon un schéma connu de succession des données TLV (acronyme pour « Tag Length Value » en langue anglaise).

La séquence de données inclut donc d'abord un identifiant ou marqueur constituée par une chaîne particulière, à savoir « CAFE », permettant de reconnaître qu'un programme est à exécuter par la carte SIM. La séquence de données suivante « 41 » permet de reconnaître que le programme à exécuter est le programme OTP d'authentification répertorié par exemple dans la mémoire ROM de la carte 3 SIM. La séquence de données suivante « 07 » permet d'indiquer la longueur des données qui suivent. La séquence de données suivante « 4D » est de nouveau un identifiant ou marqueur, qui permet de faire afficher un texte à l'écran du téléphone 2 portable pour demander confirmation à l'utilisateur. La séquence de données suivante « 05 » permet d'indiquer la longueur des données qui suivent. La séquence de données suivante « 0474657374 » est le texte affiché à l'écran du téléphone portable pour la demande de confirmation d'exécution du programme OTP d'authentification au porteur de la carte 3 SIM.

Suite à la génération de la requête d'exécution considérée, l'ordinateur 1 personnel transmet 43, sur le port série ouvert, à destination de la carte 3 SIM une commande AT+CMGW d'écriture au sein du fichier EF SMS des données relatives à la requête d'exécution du programme OTP d'authentification.

Pour ce faire, le format de données de la commande AT+CMGW inclut, selon un exemple, la séquence de données de 14 octets en hexadécimale suivante : « 0091000A8100000000000004FFOB » qui correspond à un en-tête pour des données SMS.

De cette manière, la longueur de la commande AT+CMGW est portée à 25 octets. Un tel format de données est partagé, c'est-à-dire connu de la carte 3 SIM et de l'ordinateur 1 personnel.

Le programme OTP d'authentification consiste en particulier à générer, au sein de la carte 3 SIM, un nouveau mot de passe.

Suite à la réception de la commande d'écriture au sein du fichier EF SMS des données relatives à la requête d'exécution du programme OTP d'authentification, la carte 3 SIM doit écrire ces données à une adresse d'enregistrement à déterminer au sein du fichier EF SMS sélectionné.

La carte 3 SIM écrit 44 les données relatives à la requête d'exécution du programme OTP d'authentification au sein du fichier de données EF SMS à une adresse d'enregistrement disponible pour une telle écriture. L'écriture dans le fichier EF SMS de la carte 3 SIM déclenche 47 automatiquement un évènement de mise à jour du fichier depuis l'extérieur encore appelé « External File Update » au sein de la carte 3 SIM.

En réponse à la commande d'écriture des données relatives à la requête d'exécution du programme OTP d'authentification, la carte 3 SIM transmet 45, à l'ordinateur 1 personnel, l'identifiant de l'adresse d'enregistrement désignée ci-après par « n » du fichier de données EFSMS qui a été affectée. Ainsi, l'ordinateur 1 personnel sait que la commande d'écriture qu'il a transmis 43 a été prise en compte et que l'écriture des données relatives à la requête d'exécution du programme OTP d'authentification a été effectuée à l'adresse d'enregistrement identifiée « n ». En outre, l'ordinateur 1 personnel sait que la commande de lecture des données relatives au résultat d'exécution du programme OTP d'authentification devra également affecter l'adresse d'enregistrement identifiée « n ».

Suite au déclenchement automatique de l'évènement de mise à jour du fichier EF SMS, le programme de la carte 3 SIM est notifiée automatiquement de l'écriture à l'adresse d'enregistrement identifiée « n » du fichier EF SMS.

En parallèle, une fois que l'ordinateur 1 personnel connaît l'adresse d'enregistrement du fichier EF SMS de la carte 3 SIM qu'il a à surveiller pour obtenir les données relatives au résultat d'exécution du programme OTP d'authentification, l'ordinateur 1 personnel transmet 46a, à la carte 3 SIM, une commande spécifique AT+CMGR=n de lecture du fichier EF SMS à l'adresse d'enregistrement « n ».

Tant que le programme OTP d'authentification n'a pas été exécuté par la carte 3 SIM et que l'adresse d'enregistrement du fichier EF SMS n'a pas été à nouveau modifiée par l'écriture des données relatives au résultat de l'exécution du programme OTP d'authentification, l'ordinateur 1 personnel transmet 46a, à la carte 3 SIM, de manière périodique, la même commande spécifique AT+CMGR=n de lecture du fichier EF SMS à l'adresse d'enregistrement « n ». Tant que les données lues en retour sont identiques aux données, dont l'ordinateur 1 personnel a requis l'écriture, au moyen d'une commande de lecture, l'ordinateur 1 personnel transmet 46b, à nouveau, la même commande de lecture à l'adresse d'enregistrement identifiée du fichier EF SMS.

Une fois la notification du programme de la carte 3 SIM opérée, le programme de la carte 3 SIM réalise 48 une lecture automatique du contenu de l'adresse d'enregistrement « n » du fichier EF SMS. Ainsi, la carte 3 SIM connaît le contenu des données de l'adresse d'enregistrement affecté par l'écriture suivant la commande d'écriture issue de l'ordinateur 1 personnel.

La carte 3 SIM reconnaît 49 le programme à exécuter par la carte 3 SIM.

Pour effectuer une telle reconnaissance, la carte 3 SIM extrait, dans un premier temps, des données écrites à l'adresse d'enregistrement « n » identifiée au sein du fichier EF SMS. Le programme de la carte 3 SIM vérifie, dans un deuxième temps, si les données lues correspondent à une commande spécifique particulière d'exécution d'un programme particulier issue de l'ordinateur 1 personnel, selon le format de données partagé. Le programme de la carte 3 SIM compare les données lues avec des données sauvegardées, par exemple en mémoire ROM de la carte 3 SIM, correspondant à une liste de programme(s) pouvant être exécutée(s) par la carte 3 SIM, lors d'une requête exécution, provenant de l'extérieur de la carte 3 SIM.

Le programme de la carte 3 SIM détecte que les données lues correspondent à une requête d'exécution du programme OTP d'authentification.

Le programme de la carte 3 SIM est alors dérouté vers une exécution du programme OTP d'authentification.

Le programme de la carte 3 SIM exécute 410 le programme OTP d'authentification qui génère un nouveau mot de passe.

Le programme de la carte 3 SIM écrit 411, en tant que résultat de l'exécution du programme OTP d'authentification, le nouveau mot de passe généré, à l'adresse d'enregistrement identifiée « n » du fichier EF SMS. Une telle deuxième écriture, au niveau de l'adresse d'enregistrement identifiée « n » du fichier EF SMS, des données relatives au résultat de l'exécution du programme OTP d'authentification, satisfait le format de données partagé pour échanger des données avec l'ordinateur 1 personnel.

Le fichier de données EF SMS est accessible au niveau de l'adresse d'enregistrement identifiée « n » en lecture et en écriture par le porteur de la carte 3 SIM par exemple en utilisant l'écran et le clavier du téléphone 2 portable.

Ainsi, le porteur de la carte 3 SIM peut avoir à valider l'écriture automatique des données relatives au résultat d'exécution du programme OTP d'exécution.

Selon une variante de réalisation non représentée, c'est le porteur de la carte 3 SIM qui renseigne, par une saisie manuelle par exemple à l'aide du clavier du téléphone portable, les données propres au nouveau mot de passe, et non pas l'exécution automatique du programme OTP d'authentification.

Immédiatement après la deuxième écriture au niveau de l'adresse d'enregistrement identifiée « n » du fichier EF SMS, le programme de la carte 3 SIM transmet 412 un message d'information du téléphone 2 portable que le fichier de données EF SMS a été modifié.

Le téléphone 2 portable rafraîchit 413 une mémoire de type RAM, en tant que mémoire cache, stockant l'information que le fichier EF SMS a été modifié.

Après transmission d'une commande de lecture transmise par l'ordinateur 1 personnel à la carte 3 SIM, l'opérateur 1 personnel compare 46b les données lues en retour à l'adresse d'enregistrement identifiée du fichier EF SMS avec celles dont l'ordinateur 1 personnel a requis l'écriture, l'ordinateur 1 personnel transmet, à nouveau, la même commande de lecture.

Lorsque les données lues à l'adresse d'enregistrement identifiée du fichier EF SMS sont différentes de celles dont l'ordinateur 1 personnel a requis l'écriture, alors les données enregistrées à l'adresse d'enregistrement identifiée du fichier EF SMS correspondent aux données relatives au résultat d'exécution du programme OTP d'authentification.

Pour libérer l'enregistrement du fichier EF SMS impacté successivement par les deux écritures, la première requise par l'ordinateur 1 personnel, la deuxième effectuée par la carte 3 SIM, l'ordinateur 1 personnel transmet 414, à destination de la carte 3 SIM, une commande AT+CMGD de suppression du contenu de l'adresse d'enregistrement identifiée « n ».

Enfin, l'ordinateur 1 personnel ferme 415 la connexion ouverte à l'étape 40 clôturant l'échange entre l'ordinateur 1 personnel et la carte 3 SIM de données propres à l'exécution d'un programme requis en exécution par la carte 3 SIM.

Un avantage intéressant d'un tel procédé selon l'invention réside dans le fait que le contexte de la carte 3 SIM n'est pas modifié sans que le téléphone portable n'est pas lui-même au courant d'une telle modification. De cette manière, aucun état d'instabilité du couple téléphone 2 portable/ carte 3 SIM, où le traitement en cours au sein du téléphone portable peut être altéré, ne survient.

Un autre avantage intéressant d'un tel procédé selon l'invention réside dans le fait que les commandes d'écriture et lecture sont interopérables et autorisées par la plupart des téléphones portables actuels, puisque les commandes d'écriture et de lecture satisfont au standard des télécommunications actuel, à savoir les spécifications 3GPP version 6 (acronyme pour « Third Generation Partnership Project » en langue anglaise).

L'ordinateur 1 personnel peut, à nouveau, recommencer le procédé expliqué supra, en échangeant des données avec la carte 3 SIM au travers du fichier EF SMS.

Le mode de réalisation présenté ci-dessus n'a pas pour objet de réduire la portée de l'invention, il peut donc y être apporté de nombreuses modifications sans sortir pour autant du cadre de celle-ci. En particulier, on notera que l'on peut prévoir, non pas un seul et même fichier de données pour l'échange des première et deuxième données entre le dispositif électronique portable et le terminal, comme illustré dans le mode de réalisation présenté, mais deux fichiers de données prédéterminés distincts et séparés. Pour ce faire, l'identité des premier et deuxième fichiers de données concernés peuvent être préalablement indiquée par le terminal au dispositif électronique portable.

## Revendications

1. Procédé pour exécuter au moins un programme au sein d'un dispositif (3) électronique portable, le dispositif électronique portable comprenant au moins un fichier (362) de données, le dispositif électronique portable étant relié à un terminal (1),
**caractérisé en ce que** le procédé comprend les étapes suivantes :
- le terminal écrit (43) au moins une première donnée au sein d'un premier fichier (362) de données du dispositif électronique portable,
- en réponse à la première donnée écrite, le dispositif électronique portable exécute (410) au moins un programme correspondant,
- le dispositif électronique portable écrit (411) au moins une deuxième donnée au sein d'un deuxième fichier de données du dispositif électronique portable, en tant que résultat de l'exécution dudit au moins un programme correspondant.

2. Procédé selon la revendication 1, dans lequel le terminal réalise (46a) périodiquement une lecture du deuxième fichier de données jusqu'à ce que le terminal ait lu la deuxième donnée.

3. Procédé selon l'une des revendications 1 et 2, dans lequel le dispositif (3) électronique portable est contenu dans un dispositif (2) hôte, le dispositif (2) hôte étant relié au terminal (1), et dans lequel le terminal (1) transmet (43 ou 46a) une commande d'écriture ou de lecture à destination du dispositif (3) électronique portable par l'intermédiaire du dispositif (2) hôte.

4. Procédé selon la revendication 3, dans lequel le terminal (1) et le dispositif (2) hôte échangent des données en mettant en oeuvre un premier protocole de communication, le dispositif (2) hôte et le dispositif (3) électronique portable échangeant des données en mettant en oeuvre un deuxième protocole de communication,
dans lequel le terminal (1) encapsule une commande de lecture ou d'écriture selon le deuxième protocole de communication au sein d'une commande de transfert selon le premier protocole de communication, la commande de transfert indiquant que la commande de lecture ou d'écriture est transmise à destination du dispositif (3) électronique portable,
et dans lequel le dispositif (2) hôte envoie la commande d'écriture ou de lecture au dispositif (3) électronique portable en satisfaisant le premier protocole de communication.

5. Procédé selon la revendication 1, dans lequel le procédé comprend une étape (48) de lecture du premier fichier de données effectuée par le dispositif (3) électronique portable, l'étape de lecture est une étape de reconnaissance de la première donnée au sein du premier fichier de données, la reconnaissance de la première donnée déclenchant l'exécution du programme correspondant.

6. Procédé selon la revendication 2, dans lequel les premier et deuxième fichiers de données constituent un unique fichier (362) de données, les première et deuxième données étant écrites à une seule et même adresse (364) d'enregistrement à l'intérieur dudit fichier de données,
dans lequel, lors de chaque lecture, le terminal compare (46b) la valeur de la donnée enregistrée à l'adresse d'enregistrement avec la valeur de la première donnée,
et dans lequel, lorsque la valeur de la donnée enregistrée à l'adresse d'enregistrement est différente de la valeur de la première donnée, alors ladite donnée enregistrée correspond à la deuxième donnée.

7. Procédé selon la revendication 4, dans lequel le premier protocole de communication est conforme à un standard de communication entre un ordinateur portable et un périphérique, et dans lequel le deuxième protocole de communication est conforme à un standard de communication entre un lecteur de carte à puce ou de carte à mémoire et ladite carte.

8. Procédé selon la revendication 7, dans lequel le premier protocole est choisi parmi les standards suivants : USB, Bluetooth, IEEE802.11, et FireWire, et dans lequel le deuxième protocole est choisi parmi les standards suivants: ISO7816, USB, MMC, et SD.

9. Procédé selon l'une des revendications 1 à 8, dans lequel le dispositif électronique portable est une carte (3) SIM et dans lequel les premier et deuxième fichiers de données sont des fichiers élémentaires dits EF selon la norme GSM.

10. Système électronique comprenant au moins un terminal (1) et au moins un dispositif (3) électronique portable, le dispositif (3) électronique portable comprenant au moins un fichier (362) de données et étant relié au terminal (1),
**caractérisé en ce que** le terminal (1) comprend des moyens d'écriture d'au moins une première donnée au sein d'un premier fichier (362) de données,
**en ce que** le dispositif (3) électronique portable comprend des moyens (34) d'exécution locaux d'au moins un programme correspondant en réponse à la première donnée écrite,
et **en ce que** le dispositif (3) électronique portable comprend des moyens d'écriture d'au moins une deuxième donnée au sein d'un deuxième fichier de données, en tant que résultat de l'exécution locale au dispositif électronique portable dudit au moins un programme correspondant.

11. Dispositif (3) électronique portable, le dispositif électronique portable comprenant au moins un fichier (362) de données,
**caractérisé en ce que** le dispositif électronique portable comprend :
- des moyens (34) d'écriture d'au moins une première donnée au sein d'un premier fichier (362) de données, suite à une commande spécifique provenant de l'extérieur du dispositif (3) électronique portable,
- des moyens (34) d'exécution locale d'au moins un programme associé à la première donnée écrite en réponse à l'écriture de la première donnée, et
- des moyens (34) d'écriture d'au moins une deuxième donnée au sein d'un deuxième fichier de données, en tant que résultat de l'exécution locale dudit programme.

12. Dispositif électronique portable selon la revendication 15, dans lequel le dispositif électronique portable est une carte (3) SIM telle que définie dans la norme GSM.

13. Dispositif selon la revendication 12, dans lequel les premier et deuxième fichiers de données constituent un unique fichier (362) élémentaire dit EF selon la norme GSM.

14. Dispositif selon la revendication 13, dans lequel les première et deuxième données sont écrites à une même adresse (364) d'enregistrement à l'intérieur du fichier élémentaire EF.

15. Système comprenant :
- un terminal (1) apte à communiquer avec au moins un périphérique selon un premier protocole de communication,
- un dispositif (2) hôte relié au terminal (1) et communicant avec le terminal (1) selon le premier protocole de communication, et
- un dispositif (3) électronique portable placé au sein du dispositif (2) hôte, le dispositif (3) électronique portable et le dispositif (2) hôte communiquant selon un deuxième protocole de communication, et correspondant au dispositif (3) électronique portable selon l'une des revendications 11 à 14.

16. Système selon la revendication 15, dans lequel le dispositif hôte est un téléphone (2) portable.
